## Europäisches Patentamt

## European Patent Office

## Office européen des brevets

(19)

(11) **EP 1 398 938 A2**

(12) **EUROPEAN PATENT APPLICATION**

(43) Date of publication:
**17.03.2004 Bulletin 2004/12**

(51) Int Cl.⁷: **H04L 29/06**

(21) Application number: **03020758.3**

(22) Date of filing: **12.09.2003**

| | |
|---|---|
| (84) Designated Contracting States:<br>**AT BE BG CH CY CZ DE DK EE ES FI FR GB GR<br>HU IE IT LI LU MC NL PT RO SE SI SK TR**<br>Designated Extension States:<br>**AL LT LV MK** | (72) Inventor: **Goldstein, Leo**<br>**Costa Mesa, CA 92626 (US)** |
| (30) Priority: **13.09.2002 US 242996** | (74) Representative: **Stein, Jan Anders Lennart et al<br>Albihns Stockholm AB,<br>Box 5581<br>114 85 Stockholm (SE)** |
| (71) Applicant: **ProxyConn, Inc.<br>Irvine, CA 92614 (US)** | |

(54) **System and method for transmission of data through multiple streams**

(57)     A system and method for better bandwidth utilization in a network system, comprising a proxy, a server and a client. The proxy receives a data stream from the server, splits it into multiple data streams and transmits them to the client. The clients merges the multiple data streams into one stream. Multiple embodiments for both multicast and unicast streams are disclosed.

FIG. 2

EP 1 398 938 A2

**Description**

## BACKGROUND OF THE INVENTION

FIELD OF THE INVENTION:

The invention relates generally to communication over wide area networks and more particularly to the transmission of data streams over the Internet.

DESCRIPTION OF THE RELATED ART:

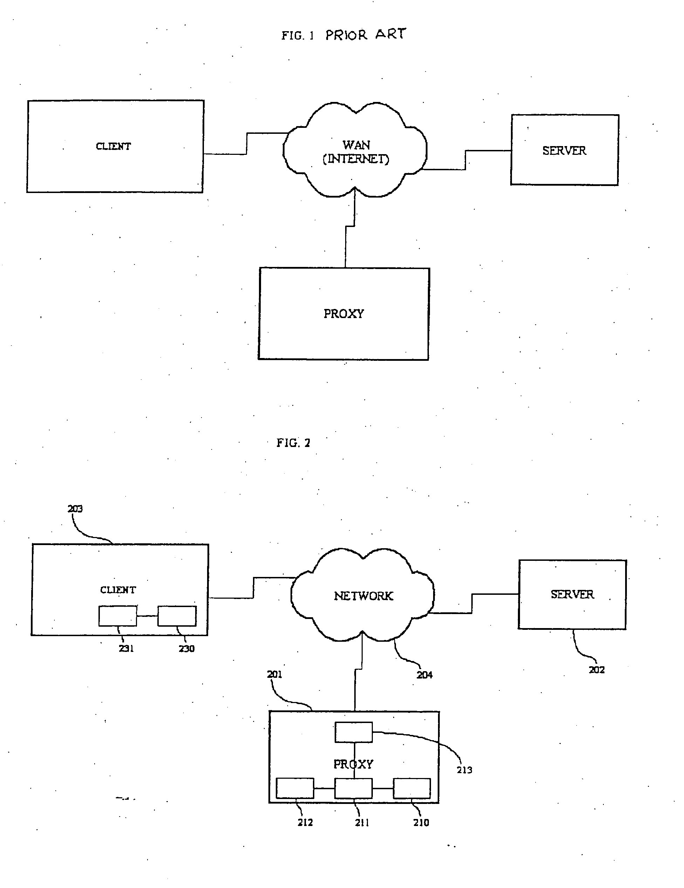

The prior art, as shown in Fig. 1, teaches the use of proxy computers for enhancing access speed over a wide area network such as the Internet. A description of an architecture of a proxy server, code named, "Squid," together with its full source code may be found at the Internet site: www.squid-cache.org. Fig. 1 shows a network configuration, including a proxy server. U.S. Patent 6,263,371 to Geagan, III, et al. teaches seaming multiple streams of data, into one stream, while filling in gaps, caused by, for instance, a packet loss. The solution, suggested by Geagan et al. does not solve the problem of insufficient transmission speed and high packet loss.

## SUMMARY OF THE INVENTION

The present invention teaches certain benefits in construction and use which give rise to the objectives described below.

The present invention is a network system and method of its use, comprising a plurality of computers wherein a first one of the computers acts in an intermediary node in the transmission of a data stream between a second and third computers. The first computer intercepts the data stream from the second computer and splits it into plural sub-data streams. The first computer then transmits the plural streams to the third computer. The third computer receives the plurality of data streams, and mergers them back into one data stream.

The present invention is also a method for improving bandwidth utilization in a network system comprising a plurality of computers. The first one of the computers acts as an intermediary node in a transmission of a data stream from the second computer to the third computer. The method includes receiving the data stream in the first computer, splitting the data stream into a plurality of data streams and then transmitting the plurality of data streams to the third computer whereupon the plurality of data streams is merged into one data stream.

It is therefore a broad object of the present invention to provide a method and a system for increasing the transmission speed and decreasing the data loss in transmission of data over computer networks, especially wide area networks.

Another object of the present invention is to increase reliability and efficiency in using available bandwidth in transmission of the data over computer networks, especially wide area networks.

Another object of this invention is to provide a system and a method for dynamic adaptation to changing network conditions.

## BRIEF DESCRIPTION OF THE DRAWINGS

The accompanying drawings illustrate the present invention. In such drawings:

Figure 1 is a block diagram of a prior art communication system;

Figure 2 is a block diagram showing a general configuration of a communication system of the present invention;

Figure 3 is a data flow diagram thereof;

Figure 4 is a diagram showing a preferred message format thereof;

Figure 5 is a block diagram defining a proxy method thereof; and

Figure 6 is a block diagram defining a client method thereof.

Other features and advantages of the present invention will become apparent from the following more detailed description, taken in conjunction with the accompanying drawings, which illustrate, by way of example, the principles of the invention.

## DETAILED DESCRIPTION OF THE INVENTION

The above described drawing figures illustrate the invention in at least one of its preferred embodiments, which is further defined in detail in the following description.

Throughout this description, the preferred embodiment and examples shown should be considered as exemplars, rather than as limitations of the present invention.

INCORPORATION BY REFERENCE: Applicant(s) hereby incorporate herein by reference, any and all U. S. patents, U.S. patent applications, and other documents and printed matter cited or referred to in this application.

Some internet protocols are mentioned in the following description. Their descriptive RFCs are listed below. Any of the RFC documents may be obtained from multiple web sites, among them: www.rfc-editor.org.

| | |
|---|---|
| IP (Internet Protocol) - | RFC 791 |
| TCP (Transmission Control Protocol) - | RFC 793 |
| UDP (User Datagram Protocol) - | RFC 768 |
| RTP (Real Time Transport Protocol) - | RFC 1889 |
| HTTP (Hypertext Transfer Protocol) - | RFC 2616 |
| FTP (File Transfer Protocol) - | RFC 959 |
| RTSP (Real Time Streaming Protocol) - | RFC 2326 |
| IP Multicasting - | RFC 1112 |

Information about Windows Media Format™ is available from the Internet site: msdn.microsoft.com, or a successor site, and information about QuickTime™ is available from developer.apple.com, or a successor Internet site.

It should be noticed, that "the client" and "the server" are descriptions of functions relative to the transmission of data streams. The client and the server may serve in other roles in other transactions, or may be intermediaries (proxies) in the transmission of data streams. A proxy may be built into a server.

A data stream may be any data, arriving in more than one network packet. The term "data stream" is used here to more clearly define the present invention. Data stream may consist of a single data object or of multiple objects.

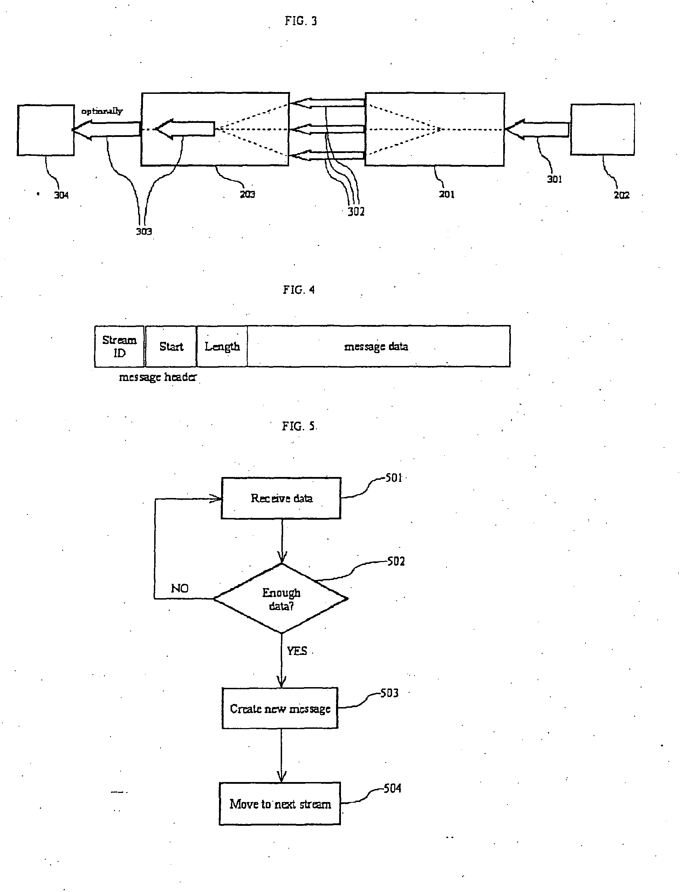

Figure 2 shows a preferred embodiment of the present invention, comprising a first computer 201 acting as an intermediary node (proxy) in a transmission of a data stream from a second computer 202, acting as a server, to a third computer 203, acting as a client. These computers are connected through a network 204. The first computer 201 further comprises a means 210 for receiving the data stream, a means 211 for splitting the data stream into a plurality of data streams, and a means 212 for transmitting said plurality of data streams to the third computer 203. The third computer 203 comprises means 230 for receiving the plurality of data streams and means 231 for combining the plurality of data streams into, again, one data stream. Optionally, the first computer 201 may comprise means 213 for adding informational redundancy into the plurality of the outgoing data streams.

Providing enabling details of the preferred embodiment; the proxy 201 has a Pentium TM CPU, RAM, a hard drive and a network card. It runs a general operating system, such as Windows 2000 or Linux. The network 204 is preferably the Internet. The server 202 is any server, accessible to the proxy 201 through the Internet. The client 203 is typically a desktop computer, having a Pentium TM CPU, RAM, a hard drive and a network card and running some version of the W indows operating system. The invention may be implemented as a computer program storable on a media that can be read by a computer system. To enable the client according to the invention, a preferred embodiment may include a step of downloading a software module, capable to merge the plurality of the data streams from the proxy into one stream.

Figure 3 shows the data flow between the computers in the preferred embodiment. The server 202 transmits an original data stream 301. The proxy 201 splits it into a plurality of data streams 302. The client 203 receives this plurality of data streams and merges them into one merged stream 303. The merged stream 303 is either consumed by the client 203 or transmitted to a fourth computer 304.

Each of the multiple streams, in which the original stream is split, consists of messages. One preferred message format is shown in Figure 4. It consists of a header of fixed size, comprising the unique stream ID, the number of the first octet of the data in the original stream, and the length of the data in octets. The data itself comes immediately after the header. It is not necessary, but in a preferred embodiment the full length of a message, including the header, is equal to the maximum size of the payload of a packet of the underlying transport level protocol. In another preferred embodiment, the data in a message corresponds to the application level objects, i.e., frames in case of a video stream. In another preferred embodiment, each of the multiple streams, into which the original stream is split, consists of octets. A preferred number of the streams lies between two and six. Of course, larger numbers can be used as well.

Now describing operation of the proxy according to the invention, consider an embodiment, in which the incoming stream is being split into N outgoing streams, consisting of messages. A pointer to one of the three outgoing streams is maintained, and it moves to the next one in a round robin fashion each time a new message is placed into an outgoing stream.

Figure 5 shows the operation of the proxy according to the invention. The proxy 201 receives a data portion from the server 202 in Step 501. If there is enough data to create a message, see check function 502, a new message is created and placed into the stream in Step 503, referenced by the pointer. The pointer is moved to the next outgoing stream in Step 504.

The client 203 assembles one data stream from the multiple incoming streams. For this purpose, it maintains a list of the arriving messages, sorted in the order of increase of the field "first octet in the data." The number of the last octet in the assembled stream portion (LAO - Last Assembled Octet) is maintained as well. The incoming streams may use either reliable or unreliable transport protocol. For the case of the unreliable transport protocol consider the embodiment, in which any message either arrives completely or is lost completely. It is always so when a full message is carried inside of the transport packet.

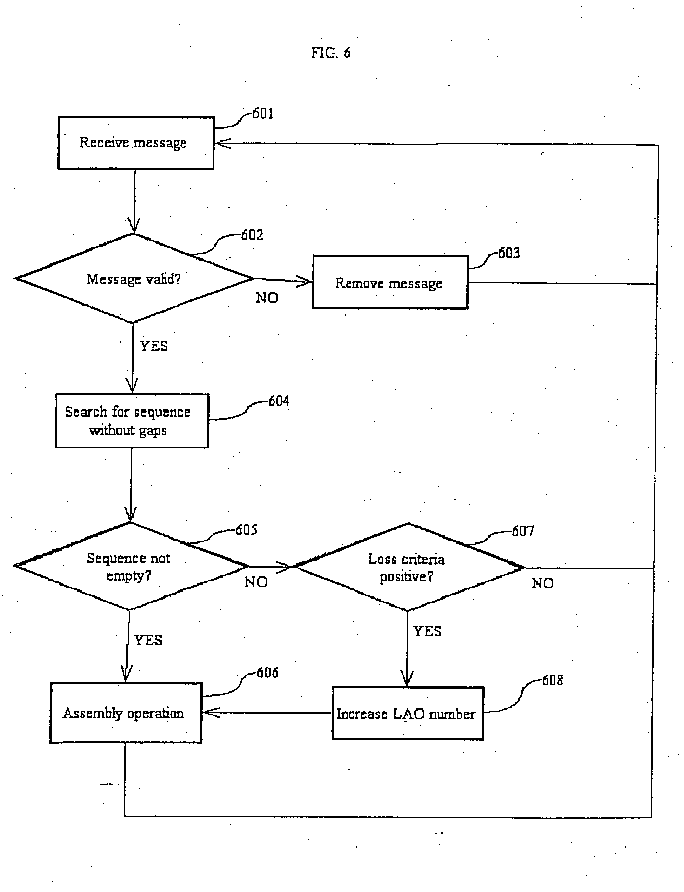

Figure 6 shows the operation of the client according to the invention. In Step 601 a message is received and added to the list. In the case of an unreliable transport protocol an additional Check 602 is performed, whether the message repeats some other message or belongs to a part of the stream, that has been already assembled. If any of these occurs, the message is not valid and it is removed from the list and discarded in Step 603. Then, the beginning of the list is searched for the longest sequence of messages without gaps in the data and without a gap between the first octet of the first message in the list and the last octet in the assembled stream (Step 604). If check point 605 shows, that such a sequence is not empty, the "assembly operation" is performed in Step 606, which includes extracting the data from the messages in the sequence, adding this data into the assembled stream in the proper order, removal of the messages of the sequence from the message list, updating LAO number, and making the new portion of the assembled data available to the application or module, consuming the stream. If such a sequence is empty, i.e., there is a gap between LAO and the first octet of the first message, then in the case of the reliable transport the system waits for another packet. In the case of the unreliable transport, a loss criterian is checked at check point check 607. The loss criteria allows the determination that one or more messages with the data immediately after LAO is lost, and to continue without them. In the preferable embodiment the loss criteria may use a timeout after sensing a first outage in an ordered message, i.e., a message, creating a gap after LAO, or an amount of the out of order messages, or a combination of them. If the loss criterian is positive, the gap immediately after LAO is treated as a loss in the stream and the LAO number is increased by the size of the gap at step 608. Then Step 606 is performed. Unless it was the end of the stream, there is always a non-empty sequence of the messages before step 606. For the sake of simplicity, handling of the end of the stream is not shown.

In the preferred embodiment the outgoing streams are transmitted in packets over IP protocol. IP protocol is the foundation of the Internet. For a unicast transmission, referred to here as "route preference,s" the combination of the following parameters of a network packet, is set by the proxy: source IP address, destination IP address, transport protocol, and routing options. "Routing options" means all other options in a network packet, that are intentionally set by a transmitting computer to influence the path or the priority of the packet in a wide area network. It includes outgoing gateway, priority etc. It should be noticed, however, that two packets with different route preferences may have the same physical path, while two packets with the same route preferences may have different physical paths.

Two unicast streams are considered different, if at least one of the following IP parameters is different for its packets: route preferences, source port, and destination port. In order to increase the bandwidth, available to the multiple outgoing streams, comparative to the case of only one combined outgoing stream, the preferred embodiment would create at least two outgoing streams with different route preferences. The simplest way to create such streams is to use different virtual IP addresses of the proxy or of the client. The higher combined bandwidth will translate into higher transmission speed. In case of an unreliable transport protocol, this translates into lower packet loss.

The invention is applicable to multicast transmission as well as to unicast transmission. Two multicast streams are considered different, if at least one of the following IP parameters is different for corresponding packets: multicast port, source IP address, and routing options.

In another embodiment of this invention, redundancy is added to the outgoing streams in order to guard against packet loss or disconnections, increasing reliability of the transmission. The simplest way to add redundancy is to repeat the data multiple times. But it is not effective because of the correspondent increase in the bandwidth consumed. The preferred embodiment would employ some of the methods, known in the art as "error correction." For example, the incoming stream is divided into N streams with the same message size. Let us designate the message number j in the stream number i as $P_{ij}$. The messages of the stream number N+1 are built as a binary sum, called also symmetric difference, of the correspondent messages from other streams.

$$P_{N+1,j} = P_{1j} + P_{2j} + ... + P_{Nj}$$

This scheme allows the restoration of the original stream in the event that any of the outgoing streams is lost or any one message in a group { $P_{1j}$, $P_{2j}$, $P_{Nj}$, $P_{N+1j}$ } is lost for any j, thereby significantly increasing reliability and decreasing loss. The proxy may dynamically change the amount of the redundant information and the number of redundant streams depending on the data loss.

The splitting an incoming stream into a plurality of outgoing streams may be called "symmetrical" as described above. But incoming data streams may be split into a plurality of outgoing streams in asymmetrical ways, employing application level segmentation. This way, different outgoing streams will have different priorities.

Examples of this are:

A multimedia stream can be split into text (the highest priority), audio (high priority), video (normal priority). A video stream can be split into intra-frames (higher priority) and all other frames (lower priority). An image in some formats can be split into higher resolution data and lower resolution data.

When transmitting these asymmetrical streams using an unreliable transport protocol, the proxy may employ optimizations, such as sending a higher priority stream through a higher priority route or adding more redundant information to the higher priority streams than to the lower priority streams.

In the case of multicast transmission from the proxy to multiple clients, typically every stream will be transmitted to a separate multicast group and identified by a multicast port number. In this embodiment, every client may subscribe to all of the groups, representing the outgoing streams and/or representing the original stream. But it can subscribe to only some of them, and it can change the subscription dynamically, depending on the network conditions. For example, to adjust to, or allow changes in the available bandwidth, or to adjust to changes in the packet loss, the multicast client may subscribe or unsubscribe to the streams with redundant information or with lower priority.

Different variations can be made in this embodiment by a person skilled in the art. The distribution of the data between the outgoing streams should not necessarily be equal or uniform in time even in case of symmetrical streams. Consider a system, transmitting a video stream to a client (the third computer) through a typical satellite Internet connection comprised of a satellite link with a maximum throughput of 400 kbps and a modem link with a maximum throughput of 56 kbps. The proxy would initially split the original incoming stream into two outgoing streams in the ratio 56: 400. Then, based on the actual throughput, it would adjust the ratio. Another variation is to transmit different outgoing streams using different transport protocols or applying them to different transformations.

If a connection oriented transport protocol, such as TCP, is used between the proxy and the client, every data stream must be represented by a separate connection. It is not trivial, because most Internet protocols use a request-response paradigm, and the response arrives over the same connection, that was used by the request. Therefore, the required connections, except for possibly one connection, must be created. It can be done in one of the following preferred ways:

1) The client is prepared to accept connections from the server, typically by creating a number of listening sockets. The proxy actively creates the required number of connections.
2) The proxy is prepared to accept connections from the client, typically by creating a number of listening sockets. The client actively creates the required number of connections.

The connections between the proxy and the client may be persistent, eliminating the overhead of connecting in the beginning and tearing down in the end of every transmission.

Any transport protocol may be used for transmission from the proxy to the client. One preferred protocol, generally used for video and audio streams, is the Real Time Transport Protocol (RTP). It is preferred in cases when data loss is allowed, especially with audio/video transmission. Another preferred transport protocol is Transmission Control Protocol (TCP). It is preferred when no data loss is allowed, such as in HTTP. User Datagram Protocol (UDP) is preferred for some applications requiring or providing a fine control over the loss and transmission rate. Application level protocols, that may be used with this invention include, but not limited to, HTTP, FTP, RTSP. Stream formats include, but are not limited to, MPEG 1,2,3,4, Windows Media Format, QuickTime, GIF, JPEG.

The proxy may do other operations as well, such as:

-    transcoding incoming data streams from one format to another, possibly adding/removing encryption, increasing compression etc.
-    transcoding some of the outgoing data streams from one format to another, possibly adding/removing encryption, increasing compression etc.

- caching the incoming data stream
- caching some of the outgoing data streams
- transmitting the outgoing data using a protocol different from the protocol of the incoming data stream
- converting from unicast to multicast or vice versa

While the invention has been described with reference to at least one preferred embodiment, it is to be clearly understood by those skilled in the art that the invention is not limited thereto. Rather, the scope of the invention is to be interpreted only in conjunction with the appended claims.

**Claims**

1. A network system comprising: a plurality of computers; a first one of the computers acting as an intermediary node in a transmission of a data stream from a second computer to a third computer; said first computer having:

    (a) means for receiving said data stream;
    (b) means for splitting said data stream into a plurality of data streams;
    (c) means for transmitting said plurality of data streams to said third computer; and said third computer having:

        (a) means for receiving said plurality of data streams;
        (b) means for merging said plurality of data streams into one data stream.

2. The system of claim 1 wherein said first computer and said third computer communicate over IP protocol and at least two streams of said plurality of data streams have different IP route preferences.

3. The system of claim 1 or 2 wherein said first computer further contains means for adding informational redundancy into said plurality of data streams.

4. The system of claim 1, 2 or 3 wherein User Datagram Protocol (UDP) is used for transmission of said plurality of data streams.

5. The system of claim 1, 2 or 3 wherein Real Time Transmission Protocol (RTP) is used for transmission of said plurality of data streams.

6. The system of claim 1, 2 or 3 wherein Transmission Control Protocol (TCP) is used for transmission of said plurality of data streams.

7. The system according to any of claims 1 -6, wherein at least one stream of said plurality of data streams has priority different from the priority of others of the plurality of data streams.

8. The system according to any of claims 1 -7, wherein multicast is used for transmission of said plurality of data streams.

9. The system of claim 8, wherein said third computer is enabled to dynamically change its subscription to at least one of the multicast groups, receiving said plurality of data streams.

10. The system according to any of claims 1 -9, further comprising a fourth computer and means for transmitting the merged data stream from said third computer to said fourth computer.

11. A method for improved bandwidth utilization in a network system providing a plurality of computers wherein a first one of the computers acts as an intermediary node in a transmission of a data stream from a second one of the computers to a third one of the computers, the method comprising the steps of:

    (a) sending a data stream from a second one of said computers;
    (b) receiving said data stream in said first one of said computers;
    (c) splitting said data stream into a plurality of data streams in said first one of said computers;
    (d) transmitting said plurality of data streams from said first one of said computers to said third one of said computers;

(e) receiving said plurality of data streams in said third one of said computers; and

(f) merging said plurality of data streams into one data stream in said third one of said computers.

12. The method of claim 11 wherein said first one of said computers actively creates a separate connection to said third one of said computers for every one of said plurality of data streams.

13. The method according to claim 11 or 12 wherein said third one of said computers actively creates multiple connections to said first one of said computers in order to accommodate the plurality of data streams.

14. The method according to any of claims 11 -13, further comprising the steps of providing a fourth one of said computers and transmitting the data stream from said third one of said computers to said fourth one of said computers.

15. The method according to any of claims 11 -14, further comprising the step of enabling said third one of said computers to merge the plurality of data streams into one data stream.

16. The method according to any of claims 11 -15, further comprising the step of adding informational redundancy into said plurality of data streams.

17. The method according to any of claims 11 -16, wherein said first one of said computers and said third one of said computers communicate over IP protocol and at least two of the streams of said plurality of data streams have different IP route preferences.

18. The method according to any of claims 11 -17, wherein
said plurality of data streams is transmitted using User Datagram Protocol (UDP); and/or
said plurality of data streams is transmitted using Real Time Transmission Protocol (RTP) ; and/or
said plurality of data streams is transmitted using Transmission Control Protocol (TCP).

19. The method according to any of claims 11 -18, wherein at least one stream of said plurality of data streams has a priority different from the priority of the remainder of said plurality of data streams.

20. The method according to any of claims 11 -19, wherein at least one of the data streams of said plurality of data streams is multicasted.

21. The method of claim 20 further comprising the step of dynamically changing a subscription to at least one of the multicast groups for receiving said plurality of data streams in the third one of said computers.

22. A computer program for improving bandwidth utilization in a network system providing a plurality of computers wherein a first one of the computers acts as an intermediary node in a transmission of a data stream from a second one of the computers to a third one of the computers; the computer program comprising:

computer readable code means which, when run on the first computer, causes the first computer to receive said data stream;
computer readable code means which, when run on the first computer, causes the first computer to split said data stream into a plurality of data streams;
computer readable code means which, when run on the first computer, causes the first computer to transmit said plurality of data streams from said first one of said computers for delivery to said third one of said computers.

23. A second computer program for causing a computer to co-operate with the computer program of claim 22, the second computer program comprising:

computer readable code means which, when run on the third computer, causes the third computer to receive said plurality of data streams; and
computer readable code means which, when run on the third computer, causes the third computer to merge said plurality of data streams into one data stream in said third one of said computers.

FIG. 1  PRIOR ART

FIG. 2

FIG. 3

FIG. 4

| Stream ID | Start | Length | message data |
|---|---|---|---|

message header

FIG. 5

FIG. 6